# EUROPÄISCHE PATENTANMELDUNG

(11) **EP 3 091 281 A1**
(43) Veröffentlichungstag der Anmeldung: **09.11.2016**
(21) Anmeldenummer: 16000830.6
(22) Anmeldetag: 13.04.2016
(51) Int. Cl.: F23C 15/00, B01J 19/28, F23N 5/16

(54) **VERFAHREN UND VORRICHTUNG ZUR EINSTELLUNG DER SCHWINGUNGSAMPLITUDEN VON SCHWINGUNGSAMPLITUDEN VON SCHWINGFEUERANLAGEN FÜR DIE MATERIALBEHANDLUG ODER -SYNTHESE**

(30) Priorität: 29.04.2015 DE 102015005224
(71) Anmelder: Büchner, Horst, 98617 Meiningen (DE)
(72) Erfinder: Büchner, Horst, 98617 Meiningen (DE)
(74) Vertreter: Petersen, Frank

(57) **Zusammenfassung**

Die Erfindung betrifft ein Verfahren zur zlelgenauen Einstellung/Nachregelung der Amplituden der Schwingungen des statischen Druckes und/oder der Heißgasgeschwindigkeit in einer Schwingfeueranlage für eine thermischen Materialbehandlung/Materialsynthese, die mindestens einen Brenner aufweist, mit dem eine schwingende (pulsierende) Flamme erzeugt wird, und mindestens einen Brennraum (Resonator), in den die Flamme gerichtet ist. Üblicherweise ist eine gezielte, unabhängige Einstettung der Amplitude (Schwlngungsstärke) der aus einer selbsterregten, rückgekoppelten Verbrennungsinstabilität resultlerenden, pulsierenden Heißgas-Strömung in einer Schwingfeuerung oder einem Pulsationsreaktor und damit auch eine Anpassung des periodisch-instationären Verbrennungsprozesses an den gewählten Durchsatz des Reaktors (bei Materlalbehandlung/Materialsynthese: z.B. die Eduktaufgaberate oder die Produktrate) ohne eine gleichzeitige, aber ungewünschte Änderung anderer Prozessparameter (Behandlungstemperatur, Verweilzeit bzw. Behandlungsdauer) und damit der erzeugten Materialeigenschaften nicht möglich. Um dies dennoch zu ermöglichen, wird vorgeschlagen, ein mit Luft, Brennstoff oder Brennstoff-Luft-Gemisch durchströmtes Schwingungsvolumen stromauf des Brenneraustritts in die zum Brenner laufenden Versorgungsleltungen des Brenners einzufügen. Vorzugsweise kann dessen Größe stufenlos einstellbar sein. Damit ist es möglich, die Amplitude der Schwingung zu verändern.

## Beschreibung

Die Erfindung betrifft ein Verfahren zur gezielten Einstellung der Schwingungsamplitude (Schwingungsstärke) eines schwingenden Verbrennungsprozesses in einer Schwingfeuerung (pulse dryer, pulse combustor, Pulsationsreaktor) in einer Anlage für die Materialbehandlung oder -synthese, die mindestens einen Brenner aufweist, dem zu einem Brenneraustritt über wenigstens eine Leitung Brennstoff und/oder Luft zugeführt wird und in der eine sich am Brennerausstritt bildende pulsierende Flamme vorhanden ist, die in einer Brennkammer brennt, und die mindestens eine resonanzfähige Gassäule (z.B. in der Brennkammer oder in einem Resonanzrohr) aufweist, der zu behandelndes Material zugeführt wird, sowie eine entsprechende Vorrichtung zur Umsetzung des Verfahrens und ein entsprechendes Anwendungsverfahren.

Die weitaus größte Zahl aller technischen oder Industriellen Feuerungsanlagen und Verbrennungssysteme werden so ausgelegt und auch so betrieben, dass der Verbrennungsprozess bis auf geringe turbulente Schwankungen, derer Größe mindestens eine Größenordnung kleiner ist als die mittleren Größen des Verbrennungsprozesses (wie z.B. mittlere Strömungsgeschwindigkeit, mittlere Temperatur der Flamme oder der Abgasströmung, mittlerer statischer Druck in der Brennkammer, etc.), im Mittel zeitlich-konstant abläuft.

Dies bedeutet, dass der Umsatz des eingesetzten Brennstoffes zeitlich kontinuierlich erfolgt und - als Folge hiervon - auch die Wärmefreisetzung aus dem Verbrennungsprozess sowie der Massenstrom an anfallendem Abgas (Verbrennungsprodukte) für eine feste Brennereinstellung zeitlich konstante Werte aufweisen.

Abweichend hiervon treten mitunter Phänomene bzw. "Abnormalitäten" auf, die in der Literatur als "Brennkammerschwingungen", "selbsterregte Verbrennungsinstabilitäten" oder "thermo-akustische Schwingungen" bezeichnet werden. Diese Phänomene sind dadurch geprägt, dass der zunächst stationäre (d.h. zeitlich-konstante) Verbrennungsprozess beim Erreichen einer Stabilitätsgrenze plötzlich umschlägt in einen zeitlichperiodischen, schwingenden Verbrennungsprozess, dessen Zeitfunktion in guter Näherung als sinusförmig bezeichnet werden kann.

Einhergehend mit dieser Änderung werden auch die Wärmefreisetzungsrate(n) der Flamme(n) und somit die thermische Feuerungslelstung der Verbrennungsanlage sowie die Abgasströmung in und aus der Brennkammer sowie der statische Druck In der Brennkammer selbst periodischinstationär, d.h. schwingend.

Das Auftreten dieser Verbrennungsinstabititäten bewirkt oftmals ein gegenüber dem stationären Betrieb der Feuerung verändertes Schadstoff-Emissionsverhalten und verursacht neben einer erhöhten Lärmbelastung der Anlagenumgebung auch eine deutlich erhöhte mechanische und/oder thermische Belastung der Anlagenstruktur (z.B. Brennkammerwände, Brennkammerauskleldung, etc.), die bis zur Zerstörung der Feuerung bzw. einzelner Komponenten führen kann.

Es ist daher leicht einzusehen, dass das unerwünschte Auftreten der oben beschriebenen Phänomene in Feuerungen zwingend vermieden werden muss, die für einen zeitlich-konstanten Verbrennungsprozess ausgelegt sind, bel dem auch der statische Druck in der Brennkammer oder in vor- bzw. nachgeschalteten Anlagenkomponenten ebenfalls konstante Werte besitzen soll, einer sogenannten Gleichdruck-Verbrennung.

Ganz anders jedoch stellt sich die Situation bei einer kleinen Anzahl von sehr speziellen feuerungstechnischen Anlagen dar, bei denen das oben dargestellte Phänomen selbsterregter, periodischer Verbrennungsinstabilitäten absichtlich herbeigeführt wird. Diese Anlagen werden dazu für die Materialbehandlung oder -synthese genutzt, um einen periodischen Verbrennungsprozess mit periodischer Wärmefrelsetzungsrate der Flamme zu erzeugen und damit eine periodisch schwingende Abgas- bzw. pulsierende Heißgasströmung in der Brennkammer und In nachgeschalteten Anlagenkomponenten wie z.B. Wärmetauschern, chemischen Reaktoren, etc.

Man kann diese Sonderanlagen einteilen in Schwingfeueranlagen, bei denen die Wärme aus dem schwingenden Verbrennungsprozess übertragen wird, z.B. zur Erzeugung von Heizwärme oder Brauchwasser oder zur Dampferzeugung (rein wärmetechnische Nutzung), und in schwingende Reaktoren, wie sie hier im Vordergrund stehen, bei denen eine physikalische und/oder chemische Materialbehandlung beabsichtigt ist wie z.B. eine Trocknung, eine Kalzinierung, eine thermisch gesteuerte Stoffsynthese, etc. Derartige Reaktoren werden häufig als "pulse dryer", als "pulse combustor" oder als "Pulsationsreaktor" bezeichnet.

Der Vorteil dieser Sonderanlagen gegenüber konventionellen Anlagen mit stationär arbeitenden Verbrennungssystemen besteht in der im zeitlichen Mittel periodisch-instationären und turbulenten Abgasströmung in der Brennkammer und/oder in nachgeschalteten Komponenten wie beispielsweise Wärmetauschern, Reaktionsräumen oder Resonanzrohren, etc.

Sowohl gegenüber festen Wänden, wie beispielsweise der Brennkammerwand, der Wand eines Wärmetauschers oder Dampferzeugers etc., als insbesondere auch gegenüber Material, das zur Behandlung in eine solche schwingende Heißgasströmung mit definierter Behandlungstemperatur eingebracht wird, steigt der Wärmeübergang vom Heißgas auf die Wände oder auf das Material deutlich um das 2- bis 5-fache an gegenüber einer im Mittel stationaren, turbulenten Strömung gleicher mittlerer Strömungsgeschwindlgkeit und gleicher Temperatur.

Deshalb erfährt erfindungsgemäß zu behandelndes Material in pulsierenden Heißgasströmungen hohe Aufheizgradienten, die auch als "Thermoschockbehandlung" bezeichnet werden.

In analoger Welse verbessert sich in derartigen Sonderanlagen auch ein Stoffübergang für zu behandelndes Material: Im Falle der periodischinstationären, schwingenden Strömung steigt die Übergangsrate gas- und oder dampfförmiger Stoffe aus dem Heißgas in das zu behandelnde Material oder von zu behandelndem Material in die Heißgasströmung um ähnliche Werte an wie oben genannt.

Hierfür wird das nahezu vollständige Fehlen von Grenzschichten als ursächlich angesehen, die bei stationären Strömungen bekannter Welse entstehen und Diffusions- bzw. Transportwiderstände darstellen.

Auf der anderen Seite stehen den erläuterten Vorteilen des instationären Verfahrens auch zahlreiche Nachteile gegenüber.

Zum einen müssen die im Verbrennungsprozess auftretenden Druck- oder Geschwindigkeitsamplituden nach oben begrenzt werden, um eine mechanische und/oder thermische Überlastung der Anlagenstruktur sicher zu vermeiden.

Zum anderen müssen auch Flammenrückschläge oder aber ein Abheben der Flamme(n) vom Brenneraustritt oder ein Verlöschen der Flamme(n) sicher vermieden werden, um einen stabil-schwingenden Dauerbetrieb zu gewährleisten.

Auch stellt eine erhöhte Lärmemission aus dem Verbrennungsprozess an die Anlagenumgebung zuweilen ein erhebliches Problem für Arbeitssicherheit und die zumutbaren Arbeitsbedingungen dar.

Über die oben genannten Grundvoraussetzungen zur Gewährleistung eines sicheren Anlagenbetriebes von Schwingfeueranlagen oder Pulsationsreaktoren hinaus, ist es ebenso wichtig, die beiden Hauptparameter der Verbrennungsschwingung - nämlich die Schwingungsfrequenz und die Schwingungsamplitude - innerhalb der Möglichkeiten eines großtechnischen Prozesses konstant zu halten. Ändern sich diese deutlich während eines Prozesses, so ist damit zu rechnen, dass die Vorteile z.B. bei der Wärmeübertragung oder bei der Materialbehandlung gegenüber dem konventionellen, stationären Prozess verlorengehen und/oder die Homogenität des entstehenden Produktes darunter leidet.

Hinsichtlich der Schwingungsfrequenz, die bei der Entstehung selbsterregter Verbrennungs-Instabilitäten durch phasenrichtige Rückkopplungen im Wirkungskreis Brenner - Flamme - Brennkammer - Resonator auftritt, besteht in der Literatur Einigkeit darüber, dass diese im Wesentlichen von der Geometrie akustisch-aktiver bzw. resonanzfähiger Volumina wie z.B. der Brennkammer und/oder dem Resonanzrohr, sowie von der Gastemperatur abhängen.

Wenn diese beiden Haupt-Einflussgrößen auf die Schwingungsfrequenz, nämlich die genannte Geometrie und die Gastemperatur, während eines Prozesses, z.B. einer Wärmeübertragung oder einer Materialbehandlung bzw. Materialsynthese, nicht verändert werden, so bleibt die Frequenz der Verbrennungs-/Druck-/Strömungsschwingungen in guter Näherung konstant.

Außer der Schwingungsfrequenz ist aber auch die Schwingungsamplitude von erheblicher Bedeutung.

Hierzu muss man wissen, dass eine Erniedrigung der Schwingungsamplitude, die beispielsweise charakterisiert wird als Amplitude der Schwingung des statischen Druckes in der Brennkammer oder der Schwingung der Geschwindigkeit der Heißgasströmung in der Brennkammer oder im Resonanzrohr, zu einem Rückgang des konvektiven Wärme- und/oder Stoffüberganges zwischen Heißgas und Wänden bzw. zwischen Heißgas und zu behandelndem Material führt. Damit können die Vorteile des instationären Prozesses verschwinden z.B. in Hinblick auf gewünschte spezifische Materialeigenschaften des behandelten Materials.

Anders als bei der Schwingungsfrequenz, die bei Belbehaltung von Geometrie und Gastemperatur konstant bleibt, kann sich die Schwingungsamplitude des periodisch-instationären Verbrennungsprozesses in einer Schwingfeueranlagen oder einem pulsierenden Reaktor während eines Prozesses deutlich ändern:
Dies wird anhand folgender Überlegungen klar: Wird in einen pulsierenden Reaktor mit fest vorgegebener Frequenz und Amplitude der Verbrennungsschwingung Rohmaterial zur thermischen Behandlung in unterschiedlichen Massenströmen (z.B. 50 kg/h oder 100 kg/h) zugegeben, dann bewirken diese unterschiedliche Massenströme an Rohmaterial eine unterschiedlich starke Dämpfung der Schwingungsamplitude. Dies ist darin begründet, dass sich die (Schwlngungs-)Energie der ursprünglichen Schwingung nur des Heißgases nach der Zugabe des Rohmaterials auf unterschiedlich hohe Partikel- oder Tropfenbeladungen des Heißgases aufteilen muss.

Im Grenzfall ist durch eine hinreichend große Zugabe von zu behandelndem Material pro Zeiteinheit es sogar möglich, die Schwingung im Reaktor völlig zum Erliegen zu bringen, wodurch dann auch die Vorteile des periodisch-Instationären Prozesses z.B. für die Erzeugung spezifischer Materialeigenschaften (z.B. Partikelgrößen, spezifische Oberflächen, Reaktivität, etc.) Im Produkt verschwinden.

Damit ist erklärbar, dass jede Änderung entweder des Massenstromes des aufgegebenen Rohmaterials oder auch der spezifischen Materialeigenschaften unterschiedlicher Edukte (wie Rohstoffdichte, Feuchtegehalt, Partikelgrößenverteilung, Feststoffgehalte bei Suspensionen, etc.) die Schwingungsamplitude der pulsierenden Heißgasströmung verändert und damit das Ergebnis der Materialbehandlung.

In der einschlägigen Patentliteratur findet man zu der Fragestellung, wie in Schwingfeueranlagen oder Pulsationsreaktoren die Schwingungsamplituden eingestellt und während eines Behandlungsprozesses nachgeregelt bzw. an unterschiedliche Reaktordurchsätze angepasst werden können, um eine konstante Produktqualität sicherzustellen, nahezu keine Aussagen: Entweder werden keine Werte für bei einer Verfahrensdurchführung einzuhaltende Schwingungsamplituden im Reaktor angegeben, oder es wird ausgeführt, dass sich die Amplituden "selbsttätig" einstellen.

Es ist davon auszugehen, dass in dem Fall, dass keine Möglichkeit zur unabhängigen Einstellung der Schwingungsamplitude gegeben ist, sondern die Schwingungsamplitude sich bei gegebener Reaktorgeometrie, Heißgastemperatur und Brennereinstellungen "seibsttätlg" einstellt, physikalisch eine Kopplung zwischen Schwingungsfrequenz und Schwingungsamplitude vorliegt: Hierbei ist zu berücksichtigen, dass je höher die (eingestellte) Schwingungsfrequenz ist, bei der ein Pulsationsreaktor arbeitet, umso höher Ist auch die Schwingungsdämpfung des Systems bei dieser Frequenz und umso niedriger sind die "selbsttätig" entstehenden Schwingungsamplituden, die sich als Folge einer erhöhten Schwingungsdämpfung einstellen.

Wird also die Schwingungsfrequenz erhöht, um eine gewünschte Erhöhung des Wärmeübergangs in einer Schwingfeuerung oder bei einer gezielten Einstellung von Partikel-/Stoffeigenschaften bei der thermischen Materialbehandlung in einem Pulsationsreaktor zu erreichen, wird der sich daraus ergebende Vorteil für den Prozess und/oder das Produkt dadurch teilweise wieder zunichte gemacht, dass gleichzeitig mit der Erhöhung der Schwingungsfrequenz die Schwingungsamplitude "selbsttätig" aufgrund der erhöhten Schwingungsdämpfung abnimmt.

So wird in der US 5,015,171 angegeben, dass Frequenz und Amplitude der Pulsationen durch "unterschiedliche Kombinationen von Flammenhalter an verschiedenen Positionen innerhalb des Heißgaserzeugers" kontrolliert werden können. Eine konkrete Vorschrift für die Auswahl und Positionierung entsprechender Flammenhalter oder ein physikalischer, nachvollziehbar Wirkungsmechanismus, der hier zugrunde liegen könnte, werden aber nicht angegeben.

Andere Ausführungen zur Einstellung/Regelung der Schwingungsamplitude durch Änderungen der Brennereinstellungen finden sich in der EP 2 092 976. Dort wird vorgeschlagen, die absoluten Brennstoff- oder Verbrennungsluft-Massenströme, das Brennstoff/Luft-Verhältnis oder die Luftzahl zu verändern.

Tatsächlich sind diese Maßnahmen aber nicht zielführend, da mit der Änderung dieser Parameter auch andere wichtige Prozessparameter verändert werden, die die Materialeigenschaften von behandelten Produkten wesentlich mitbestimmen. Bei diesen anderen Prozessparametern handelt es sich z.B. um die Materialbehandlungstemperatur oder die Verweilzelt des zu behandelnden Materials in der Heißgasströmung etc.

Daraus kann gefolgert werden, dass es gemäß der Lehre dieser Druckschrift vielleicht möglich ist, bei zwei unterschiedlichen Rohstoff-Aufgaberaten vergleichbare Amplituden der Materialbehandlung im Pulsationsreaktor herzustellen - die dabei jeweils erzielten Materialeigenschaften wären jedoch dennoch nicht vergleichbar.

Der vorliegenden Erfindung liegt somit die Aufgabe zugrunde, bei einer Schwingfeuerung für die Materialbehandlung oder -synthese wie oben beschrieben, die mindestens einen Brenner aufweist, dem zu einem Brenneraustritt über wenigstens eine Leitung Brennstoff und/oder Luft zugeführt wird und in der eine sich an dem Brenneraustritt bildende pulsierende Flamme vorhanden ist, die In einer Brennkammer brennt, und die auch noch eine resonanzfähige Gassäule aufweist, dahingehend weiterzuentwickein dass eine Steuerbarkeit der Schwingungsamplitude möglich ist. Wesentlich ist dabei, dass die Schwingungsfrequenz dabei im Wesentlichen unverändert bleiben soll.

Diese Aufgabe wird erfindungsgemäß dadurch gelöst, dass die wenigstens eine Leitung, die Brennstoff und/oder Luft zu dem Brenneraustritt führt, stromaufwärts des Brenneraustritts mit wenlgstens einem Schwingungsvolumen strömungstechnisch zu verbinden ist.

Der Erfindung liegt die Erkenntnis zugrunde, dass die Amplitude des schwingenden Verbrennungsprozesses im Wesentlichen durch die Pulsation der Flamme bestimmt wird. Diese kann insbesondere durch eine Pulsation der die Flamme speisenden Strömungen beeinflusst werden. Es Ist dabei davon auszugehen, dass bei einem normalen Brennerbetrieb die Zufuhr von Luft und/oder Brennstoff mit einem konstanten Vordruck erfolgt und somit auch der Druck am Brenneraustritt in erster Näherung konstant ist.

Indem jetzt die Brennstoff und/oder Luft zuführende Leitung stromaufwärts des Brenneraustritts mit einem Schwingungsvolumen zu verbinden ist, besteht die Möglichkeit, dass der am Brenneraustritt im Brennraum wirkende pulsierende Druck sich auf die zuströmende Menge an Gas auswirken kann. Das mit konstantem Vordruck zuströmende Gas wie Luft, Brennstoff oder Brennstoff-Luft-Gemisch kann in das Schwingungsvolumen periodisch ein- und ausströmen, was sich am Brenneraustritt in einem sich periodisch ändernden Volumenstrom auswirkt.

Da dabei aber die Menge an Luft, Brennstoff oder Brennstoff-Luft-Gemisch über die Zeit gemittelt sich nicht ändert, bleiben die die Schwingungsfrequenz im Wesentlichen beeinflussenden Parameter unverändert und nur die Amplitude der Schwingung ändert sich.

Durch die Größe des gewählten Schwingungsvolumens kann dabei die auftretende periodische Änderung und damit die Größe der Amplitude beeinflusst werden.

Es wurde dabei herausgefunden, dass die Amplitude sich dergestalt verändert, dass mit zunehmend größerem Schwingungsvolumen, das auf der kalten Seite des Brenners positioniert ist, die Amplitude der Schwingung des statischen Druckes in der Brennkammer und den nachgeschalteten Heißgas führenden Anlagenkomponenten ansteigt, ohne dass hierzu andere Parameter der Feuerung oder Brennereinstellung verändert werden müssten.

Somit wird mit der hier beschriebenen Erfindung allein die Stärke der Druckschwingung verändert, die z.B. durch die Amplitude der Schwingung des statischen Druckes in der Brennkammer charakterisiert ist.

Die Amplitude kann somit durch Wahl der richtigen Größe des auf der kalten Selte des Brenners angeordneten Schwingungsvolumens auch zielgerichtet verändert werden, z.B. um diese Amplitude an eine geänderte Aufgaberate eines Rohstoffes anzupassen, ohne dass dabei die Frequenz geändert wird.

Bei einer besonders bevorzugten Ausführungsform der Erfindung ist das Schwingungsvolumen, das mit der wenigstens einen Leitung für Brennstoff und/oder Luft verbunden wird, In seiner Größe daher veränderbar. Das Schwingungsvolumen ist somit In seinem Volumen als Resonator abstimmbar.

Dies gibt die Möglichkeit, die sich am Brenneraustritt einstellende, sich periodisch ändernde Strömung entsprechend zu beeinflussen und damit die Schwingungsamplitude bedarfsgerecht einzustellen.

Es ist zwar möglich, hierfür mehrere, ggf. auch verschieden große und ggf. auch miteinander kombinierbare Schwingungsvolumina vorzusehen. Bei einer besonders bevorzugten Ausführungsform wird stattdessen aber für verschieden Schwingungsamplituden ein in der Größe seines Volumens verstellbares Zylinder-Kolben-Aggregat als Schwingungsvolumen vorgeschlagen. Die Größe des Volumens ist dabei durch eine Verstellung des Kolbens innerhalb des Zylinder-Kolben-Aggregates zu verändern.

Mit einer entsprechenden Konstruktion besteht dann die Möglichkeit, die Amplitude der sich im Übrigen anlagenspezifisch einstellenden Schwingungsfrequenz bedarfsgerecht anzupassen, ohne dass sich dabei die Frequenz ändert.

Das erfindungsgemäße Verfahren ist also dadurch gekennzeichnet, dass bei dem Betrieb einer Schwingfeuerung wie oben beschrieben ein Schwingungsvolumen zunächst mit der angesprochen wenigstens einen Leitung strömungstechnisch verbunden wird. In Weiterbildung dieses erfinderischen Verfahrens wird dann das Schwingungsvolumen in seiner Größe verändert.

Wie beschrieben kann die Veränderung der Größe des Volumens beispielsweise stufenlos erfolgen durch Verstellung des Kolbens eines Zylinder-Kolben-Aggregates, wobei der Kolben gegenüber der Behälterwand sowie der Umgebung abgedichtet ist.

Alternativ wäre es möglich, bei einem Schwingungsvolumen dessen Größe stufenlose einzustellen durch dessen teilweises Auffüllen mit einem nicht kompressiblen Stoff (z.B. Wasser, Sand, etc.).

Es ist dem Fachmann klar, dass ein entsprechendes Schwingungsvolumen eine beliebige Form aufweisen darf (Zylinder, Kasten, Kugel, etc). Diese sollte jeweils druckfest ausgelegt sein. Vorzugsweise soll auch jeweils eine definierte Einstellung luftdicht abgetrennter Teilvolumina erfolgen können.

Die erfindungsgemäße Funktion des Schwingungsvolumens kann auch mit in das Brennergehäuse integrierter Bauform erfüllt werden. Man hat dann beispielswelse ein Brennergehäuse mit auf der kalten Selte des Brenners angeordneten Schwingungsvolumen Insbesondere mit stufenlos einstellbarer Größe.

Es sei noch erwähnt, dass das Schwingungsvolumen sowohl nur durch Luft als auch bei einer voll-vorgemischten Verbrennungsführung (Vormisch-Verbrennung) von einem Brenngas/Luft-Gemisch durchströmt werden kann.

Damit ist immer das Ziel zu erreichen, die Schwingungsfrequenz und die Schwingungsamplitude der pulsierenden Heißgasströmung unabhängig voneinander und ohne gegenseitige Beeinflussung einstellen zu können.

Ein solches Verfahren kann insbesondere benutzt werden, um feinteilige Partikel herzustellen, mit einer mittleren Partikelgröße im Bereich von 5 nm bis 3 mm.

Weitere Vorteile und Merkmale der Erfindung ergeben sich aus der nachfolgenden Beschreibung von Ausführungsbeispiel. Dabei zeigt
- Fig. 1: die Prinzipskizze einer erfindungsgemäßen Vorrichtung.
- Fig. 2: die Prinzipskizze einer alternativen Ausführungsform einer erfindungsgemäßen Vorrichtung.

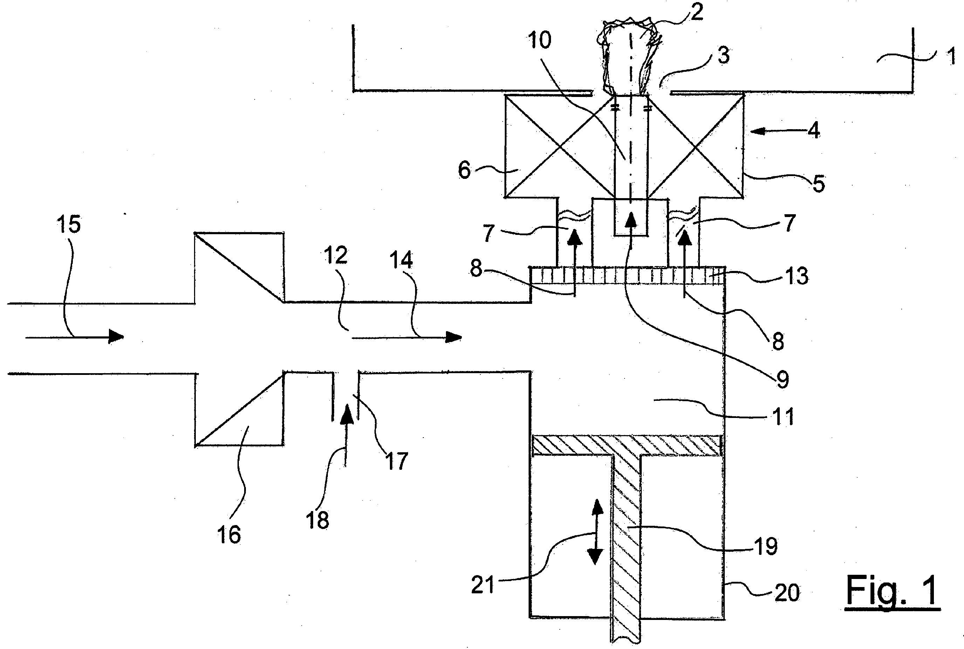

In Fig. 1 Ist die Prinzipskizze einer erfindungsgemäßen Vorrichtung dargestellt.

Man erkennt eine Brennkammer 1, in die eine Flamme 2 gerichtet ist.

Die Flamme 2 entsteht an einem Brenneraustritt 3 eines Brenners 4. Dabei werden die strömungstechnisch vor dem Brenneraustritt liegenden Abschnitte der Vorrichtung als kalte Seite des Brenners angesehen.

Die Flamme 2 pulsiert und bewirkt dadurch in der Brennkammer und/oder einer dieser nachgeschalteten Reaktorkammer eine Pulsation der dort vorhandenen anlagenspezifisch resonanzfähigen Glassäule. In diese Brennkammer oder der Reaktorkammer wird ein Edukt zugeführt, in der schwingenden Gassäule aus Heißgas behandelt und abschließend wird das so erzeugte Produkt aus dem Heißgasstrom wieder entfernt, beispielsweise durch einen Heißgasfilter, einen Zyklon oder Ähnliches.

Die Pulsation der Flamme 2 ist eine selbsterregte Verbrennungsinstabilität, wobei die Frequenz ihrer selbsterregten Schwingung zum großen Teil durch die geometrischen Abmessungen der Brennkammer, des Reaktionsraumes und entsprechender anlagentechnischer An- und Einbauten mitbestimmt wird, die zunächst einmal auf der heißen Seite des Brenners zu finden sind, die sich stromab des Brenneraustritts 3 befinden.

In dem Brennergehäuse 5 des Brenners 4 befindet sich ein Drallerzeuger 6, mit dem durch Leitungen 7 zuströmende Luftströme 8 mit einem Drall versehen werden, um sich dann am Brenneraustritt 3 mit Brenngas 9 zu mischen, das durch eine Brenngasleitung 10 an den Brenneraustritt 3 geführt wird.

Stromaufwärts der Leitungen 7 strömt das durch diese Leitungen 7 strömende Gas 8 durch ein Schwingungsvolumen 11, dem Gas 14 durch eine Zuführleitung 12 zugeführt wird.

Das durch das Schwingungsvolumen 11 strömende Gas 8 wird im hier dargestellten Beispiel über einen Lamellen-Strömungsgleichrichter 13 geführt, so dass alle Leitungen 7 Im Brenner 4 im Wesentlichen gleich angeströmt werden.

Das in der Zuführleitung 12 strömende Gas 14 ist entweder reine Luft 15, die in einem Kompressor bzw. Verdichter oder einem Gebläse 16 auf einen Vordruck gebracht wurde.

Oder aber es handelt sich bei diesem Gas 14 bereits um ein Brennstoff-Luft-Gemisch, wenn der reinen Luft 15 durch eine Brennstoffleitung 17 Brenngas 18 zugeführt wird. - In diesem Fall kann auch die Brenngasleitung 10 im Brenner 4 entfallen, über die dort reines Brenngas 9 dem Brenneraustritt 3 zugeführt wird.

Wesentlich Ist bei der hier dargestellten Vorrichtung, dass das Schwingungsvolumen 11 eine veränderbare Größe hat, Indem ein Kolben 19 In einem Zylinder 20 verschiebbar und bedarfsweise arretierbar ist.

Der Kolben 19 kann gemäß dem Doppelpfeil 21 zwischen einer minimalen und einer maximalen Volumenposition verschoben werden, wobei das Volumen, das im minimalen Fall zwischen dem Kolben 19 und den Lamellen-Strömungsgleichrichter 13 vorhanden ist, etwa 5 bis 10 Liter beträgt, während das maximal erreichbare Volumen Werte zwischen 200 und 2000 Liter haben kann.

Lediglich der guten Ordnung halber sei darauf hingewiesen, dass das Schwingungsvolumen in seiner Größe zur Erreichung einer bestimmten Amplitude der Druckschwingung einmalig verstellt und dann in einer passenden Größe fixiert wird.

Die oben angesprochene selbsterregte Schwingung wird also nicht durch eine extern bewirkte Hin- und Herbewegung des Kolbens 19 entsprechend dem Doppelpfeil 21 bewirkt, da sie eine Verbrennungs-Instabilität ist, die aus einer phasenrichtigen Rückkopplung im Wirkungskreis Brenner-Flamme-Brennkammer-Reaktionsraum/Resonator resultiert.

Die wie beschrieben fest eingestellte Größe des Schwingungsvolumens 11 beeinflusst über die Kompressibilität des in dem Schwingungsvolumen 11 befindlichen Gases die Druckfestigkeit der Brennerversorgung,

Es ist dem Fachmann nahellegend, dass zwischen dem Kolben 19 und der Wandung des Zylinders 20 eine übliche Dichtung vorhanden ist, die eine Gasdichtigkeit gewährleistet, beispielsweise eine O-Ririg-Dichtung oder aber auch eine spezielle Kolben-Dichtung.

Das mit im Wesentlichen konstantem Vordruck aus dem Verdichter 16 durch die Zuführleitung 12 strömende Gas 14 tritt zunächst in das Schwingungsvolumen 11 ein. In diesem Schwingungsvolumen herrscht ein pulsierender Druck, da der Druck in diesem Schwingungsvolumen durch den Druck im Brennraum 1 beeinflusst wird, der ebenfalls aufgrund der dort pulsierenden Verbrennung der Flamme 2 pulsiert.

Aufgrund des pulsierenden Druckes strömt das Gas 14 zwar mit etwa konstantem Volumenstrom in das Schwingungsvolumen 11 ein aber mit einem pulsierenden Volumenstrom aus ihm hinaus. Es strömt dann als Luft 8 (ggf. mit Brenngas 18 aus der Brennstoffleitung 17 versetzt auch als Brennstoff-Luft-Gemisch) über die Leitungen 7 durch den Drallerzeuger 6 hindurch an der Brenneraustrittsöffnung 3 vorbei In die Flamme 2 hinein.

Der pulsierende Volumenstrom an Gas (also Luft 8 oder hier strömendes Brennstoff-Luft-Gemisch) verstärkt die Pulsatlon der Flamme 2, verändert dabei aber nur die Amplitude der durch diese Pulsation der Flamme erzeugten Schwingung nicht aber deren Frequenz.

Über die Einstellung der Größe des Schwingungsvolumens 11 kann dabei die Masse an in das Schwingungsvolumen 11 kontinuierlich einströmendem aber pulsierend ausströmendem Gas 14 bzw. 7 und damit auch die Amplitude der im Brennraum 1 oder einem diesem nachgeschalteten (nicht dargestellten) Resonanzrohr als Reaktionsraum vorliegenden Schwingung einer Gassäule (die durch Heißgas aus der Verbrennung gespeist wird) beeinflusst werden.

Die Amplitude der Schwingung des statischen Druckes in der Brennkammer 1 und den nachgeschalteten Heißgas führenden Anlagenkomponenten verändert sich also dergestalt, dass sie sich mit vergrößerndem Schwingungsvolumen 11 vergrößert und bei einer Verkleinerung des Schwingungsvolumen 11 verkleinert, und zwar ohne dass hierzu andere Parameter der Feuerung oder Brennereinstellung verändert werden müssten.

Im Prinzip ist also davon auszugehen, dass mit einer Vorrichtung wie beschrleben die Drucksteifigkelt der Brennerversorgung mit Luft und/oder mit Brenngas - vorzugsweise stufenlos - einstellbar ist und damit an die Schwingungseigenschaften der heißgasführenden Anlagenteile anzupassen ist, zu denen Brennkammer, Resonanzrohr und ein Reaktor zählen.

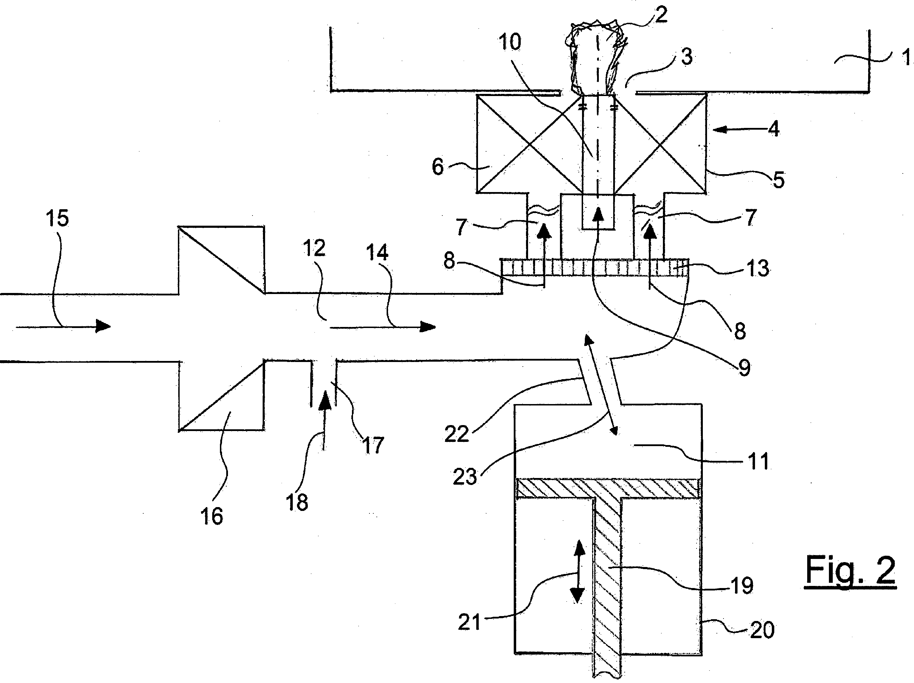

In der Fig. 2 ist eine alternative Ausführungsform dargestellt. Gleiche Teile sind dabei mit gleichen Bezugszeichen versehen.

Der wesentliche Unterschied besteht darin, dass das Schwlngungsvolumen 11 bei der Ausführungsform gemäß Fig. 2 über ein Verbindungsrohr 22 strömungstechnisch mit der Leitung verbunden ist, die Brennstoff und/oder Luft zu dem Brenneraustritt 3 führt.

Während bei der Ausführungsform gemäß Fig. 1 wie oben erläutert das Gas 14 durch das Schwingungsvolumen 11 hindurchströmt, um zum Brenner 4 zu gelangen, ist bei der Ausführungsform gemäß Fig. 2 vorgesehen, dass dieses Gas 14 nur zum Teil als Pulsationsströmung 23 in das Schwingungsvolumen 11 ein- und unmittelbar wieder ausströmt.

Der Durchmesser des Verbindungsrohres 22 ist dabei so zu wählen, dass das in das Schwingungsvolumen 11 ein- und ausströmende Gas nicht behindert wird und somit das in seiner Größe verstellbare Schwingungsvolumen 11 die Druckstetfigkeit des Brenners 4 wie oben beschrieben beeinflussen kann.

Anders als hier dargestellt kann das Schwingungsvolumen 11 auch statt an die Leitung angeschlossen zu werden, die Brennstoff und/oder Gas zum Brenneraustritt 3 führt, unmittelbar im Brenner 4 so angebunden sein, dass es die Druckfestigkeit der Brennerversorgung beeinflusst.

Damit gibt die vorliegende Erfindung eine funktionierende und betriebssichere Lösung an, um in schwingenden Verbrennungsprozessen eine Schwingungsamplitude gezielt einstellen zu können. Damit kann z.B. der Dämpfung der Amplitude gezielt entgegengewirkt werden, die durch die Aufgabe von zu behandelndem Rohstoff in die schwingende Heißgassäule bewirkt wird.

### Literatur

Büchner, Horst: Experimentelle und theoretische Untersuchungen der Entstehungsmechanismen selbsterregter Druck-/Plammenschwingungen in technischen Vormisch-Verbrennungssystemen; Verlag Shaker, Aachen 1992; ISBN 3-86111-291-4
Putnam, A.A.: Combustion-Driven Oscillations in Industry; Elsevier Publishing Company; New York; 1971
Begand, S., Dahm, B. und Ambrosius, S.: Einsatz des Pulsationsreaktors für die Stoffbehandlung in der chemischen Industrie; Chemie Ingenieur Technik (70), 1998; Seite 746-748
United States Patent Nr. 5,015,171 vom 14. Mal 1991; Zinn et al.: Tunable Pulse Combustor
Offenlegungsschrift DE 101 09 892 A1 vom 5.9.2002: Verfahren zur Herstellung monomodaler nanokristalliner Oxidpulver
Europäische Patentanmeldung EP 2 092 976 A1 vom 29.01.2009: Verfahren zur Herstellung feinteiliger Partikel

### Bezugszeichenliste

- 1: Brennkammer
- 2: Flamme
- 3: Brenneraustritt
- 4: Brenner
- 5: Brennergehäuse
- 6: Drallerzeuger
- 7: Leitungen
- 8: Luftströme
- 9: Brenngas
- 10: Brenngasleitung
- 11: Schwingungsvolumen
- 12: Zuführleitung
- 13: Lamellen-Strömungsglelchrichter
- 14: Gas
- 15: Reine Luft
- 16: Verdichter
- 17: Brennstoffleltung
- 18: Brenngas
- 19: Kolben
- 20: Zylinder
- 21: Pfeil
- 22: Verbindungsrohr
- 23: Pulsationsströmung

## Patentansprüche

1. Schwingfeuerung In einer Anlage für die Materialbehandlung oder - synthese, die mindestens einen Brenner (4) aufwelst, dem zu einem Brenneraustritt (3) über wenigstens eine Leitung (7) Brennstoff und/oder Luft zugeführt wird und in der eine sich an dem Brenneraustritt (3) bildende pulsierende Flamme (2) vorhanden ist, die in einer Brennkammer (1) brennt, und die eine resonanzfähige Gassäule aufweist,
**dadurch gekennzeichnet,**
**dass** die wenigstens eine Leitung (7) mit wenigstens einem Schwingungsvolumen (11) strömungstechnisch zu verbinden ist.

2. Schwingfeuerung gemäß Anspruch 1,
**dadurch gekennzeichnet,**
**dass** das Schwingungsvolumen (11) in seiner Größe veränderbar ist

3. Schwingfeuerung gemäß einem der Ansprüche 1 oder 2
**dadurch gekennzeichnet,**
**dass** das Schwingungsvolumen durch ein Zylinder-Kolben-Aggregat (19, 20) gebildet ist

4. Verfahren zum Betrieb einer Schwingfeuerung gemäß Anspruch 1,
**dadurch gekennzeichnet,**
**dass** das Schwingungsvolumen (11) mit der wenigstens einen Leitung (7) strömungstechnisch verbunden wird.

5. Verfahren gemäß Anspruch 4
**dadurch gekennzeichnet,**
**dass** das Schwingungsvolumen (11) in seiner Größe verändert wird.

6. Verwendung der Vorrichtung gemäß einem oder mehreren der Ansprüche 1 bis 4 In einem Verfahren zur Herstellung Feintelliger Partikel, mit einer mittleren Partikelgröße im Bereich von 5 nm bis 3 mm.
